# Europäisches Patentamt
## European Patent Office
### Office européen des brevets

(19)

(11) Veröffentlichungsnummer : **0 368 019 B1**

(12) **EUROPÄISCHE PATENTSCHRIFT**

(45) Veröffentlichungstag der Patentschrift :
**08.04.92 Patentblatt 92/15**

(51) Int. CI.$^5$ : **A01D 43/02, A01B 33/14**

(21) Anmeldenummer : **89118935.9**

(22) Anmeldetag : **12.10.89**

(54) **Gerät zum Mähen und Vertikutieren von Rasenflächen.**

(30) Priorität : **09.11.88 DE 3837937**
**21.03.89 DE 3909163**

(43) Veröffentlichungstag der Anmeldung :
**16.05.90 Patentblatt 90/20**

(45) Bekanntmachung des Hinweises auf die
Patenterteilung :
**08.04.92 Patentblatt 92/15**

(84) Benannte Vertragsstaaten :
**CH DE FR GB IT LI NL SE**

(56) Entgegenhaltungen :
**DE-A- 3 629 746**

(56) Entgegenhaltungen :
**DE-B- 1 126 183**
**DE-U- 8 704 846**
**FR-A- 2 438 965**
**GB-A- 1 588 530**
**US-A- 3 693 335**

(73) Patentinhaber : **Amazonen-Werke H. Dreyer**
**GmbH & Co. KG**
**Am Amazonenwerk 9-13**
**W-4507 Hasbergen-Gaste (DE)**

(72) Erfinder : **Schomäker, Wilfried**
**Dr. Schier-Strasse 16E**
**W-6670 St. Ingbert (DE)**
Erfinder : **Pfisterer, Thomas**
**Neffstrasse 6**
**W-6600 Saarbrücken (DE)**

EP 0 368 019 B1

**Beschreibung**

Die Erfindung betrifft ein Gerät zum Mähen und Vertikutieren von Rasenflächen gemäß Oberbegriff des Patentanspruches 1.

Ein derartiges Gerät ist beispielsweise durch die FR-OS 24 38 965 bekannt. Dieses Gerät läßt sich zum Vertikutieren und gleichzeitigem Kehren einsetzen, denn zusätzlich zu den Messern sind Bürstenelemente auf dem Rotationskörper angeordnet, um so daß Aufsammeln des Vertikutiergutes oder des gemähten Gutes zu ermöglichen. Bei diesem bekannten Gerät sind die Bürsten und Messer auf einer runden Rotationstrommel angeordnet, Weiterhin sind die Halterungen für die Bürsten und Messer mit gleichen radialen Abständen zur Rotationsachse auf der Rotationstrommel angebracht. Diese Anordnung hat den entscheidenden Nachteil, daß nur relativ kurze Bürstenelemente eingesetzt werden können, Somit müssen die Bürsten sehr häufig aufgrund des großen Verschleißes ausgewechselt werden.

Der Erfindung liegt nun die Aufgabe zugrunde, durch einfachste Maßnahmen längere Standzeiten der Bürsten zu gewährleisten.

Diese Aufgabe wird erfindungsgemäß dadurch gelöst, daß zusätzlich zu den Messern an den Rotationskörpern Bürstenelemente angebracht sind. Durch diese erfindungsgemäße Maßnahme wird es erstmalig in einfachster Weise möglich, lange Standzeiten von Bürsten zu errechen, Denn es können aufgrund der besonderen Ausbildung der Rotationstrommel und der entsprechenden Anordnung der Halterungen sehr lange Bürsten eingesetzt werden. Außerdem ergibt sich ein sehr gutes Mähergebnis, Darüberhinaus können bei dem erfindungsgemäßen Gerät normale Vertikutier- und Mähmesser einer Rasen- und Vertikutiermaschine, sowie Bürstenelemente einer normalen Kehrmaschine verwendet werden.

Hierbei kann das Halterungsrohr einen ovalen Querschnitt oder einen mehreckigen Querschnitt aufweisen, der einem zusammengedrückten Vieleck ähnelt.

Um die Befestigung der Bürstenelemente an den Halterungen mit dem größten radialen Abstand zur Rotationsachse des Halterungsrohres wesentlich zu vereinfachen, ist in erfindungsgemäßer Weise vorgesehen, daß an der Rotationstrommel jeweils für die Messer und für die Bürstenelemente eigene Halterungen angebracht sind.

Infolge dieser Maßnahme lassen sich die einen Verschleiß unterliegenden Bürstenelemente auf einfachste Weise an den entsprechenden Halterungen in unterschiedlichen radialen Abständen zur Rotationsachse des Halterungsrohres anordnen. Die Anordnung der Bürstenelemente an den mit unterschiedlichen radialen Abständen zur Rotationsachse des Halterungsrohres angeordneten Halterungen gewährleistet, daß der Rotationsradius zwischen der Rotationsachse und der Umlaufbahn der unterschiedlich langen Bürstenelemente immer gleichbleibt, Hierdurch erfolgt das Aufsammeln des Kehrgutes bzw. des gemähten und/oder aus dem Rasen heraus vertikutierten Gutes in zufriedenstellender Weise, da der Abstand zwischen der Umlaufbahn der Bürstenelemente und dem Prallblech des Gutförderkanals sowie der Oberfläche der zu kehrenden Fläche annähernd konstant bleibt, so daß das von den Bürstenelementen aufgenommene Gut in ordnungsgemäßer Weise über den Gutförderkanal in das Innere des Sammelgutbehälters gelangt und gute Kehrarbeit der Bürstenelemente auf der Bodenoberfläche erreicht wird.

Bei der Ausführungsform ist in erfindungsgemäßer Weise vorgesehen, daß die Messer mit Zwischengliedern an den an der Rotationstrommel angebrachten Halterungen befestigt sind, und daß diese Zwischenglieder an der Rotationstrommel verbleiben, wenn die Bürstenelemente an der Rotationstrommel angeordnet werden. Hierdurch entfällt nun in besonders vorteilhafter Weise die Demontage der Zwischenglieder, mit denen die Messer an den Halterungen der Rotationstrommel befestigt sind. Es ist nunmehr nur noch notwendig, die Messer, welche werkzeuglos an den Zwischengliedern montier- bzw. demontierbar sind, von den Zwischengliedern zu entfernen. Hiernach lassen sich dann die Bürstenelemente sehr einfach an den den Halterungen für die Messerelemente benachbarten, für die Bürstenelemente vorgesehenen Halterungen befestigen.

Weitere Einzelheiten der Erfindung sind den übrigen Unteransprüchen, der Beispielsbeschreibung und den Zeichnungen zu entnehmen. Hierbei zeigt

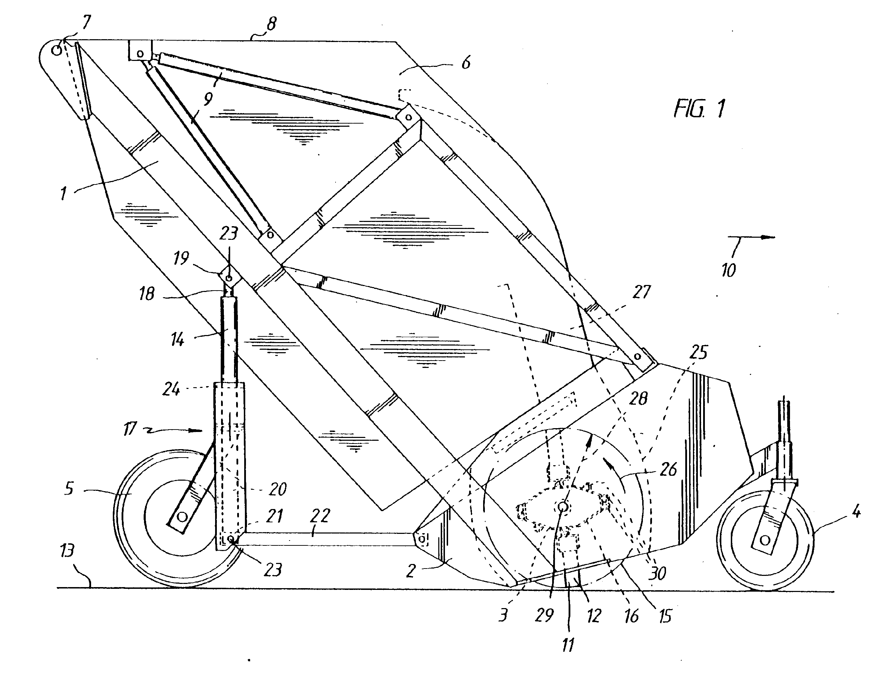

Fig. 1 das in erfindungsgemäßer Weise ausgebildete Gerät zum Mähen, Vertikutieren und Aufsammeln von Gut in Prinzipdarstellung und in der Seitenansicht,

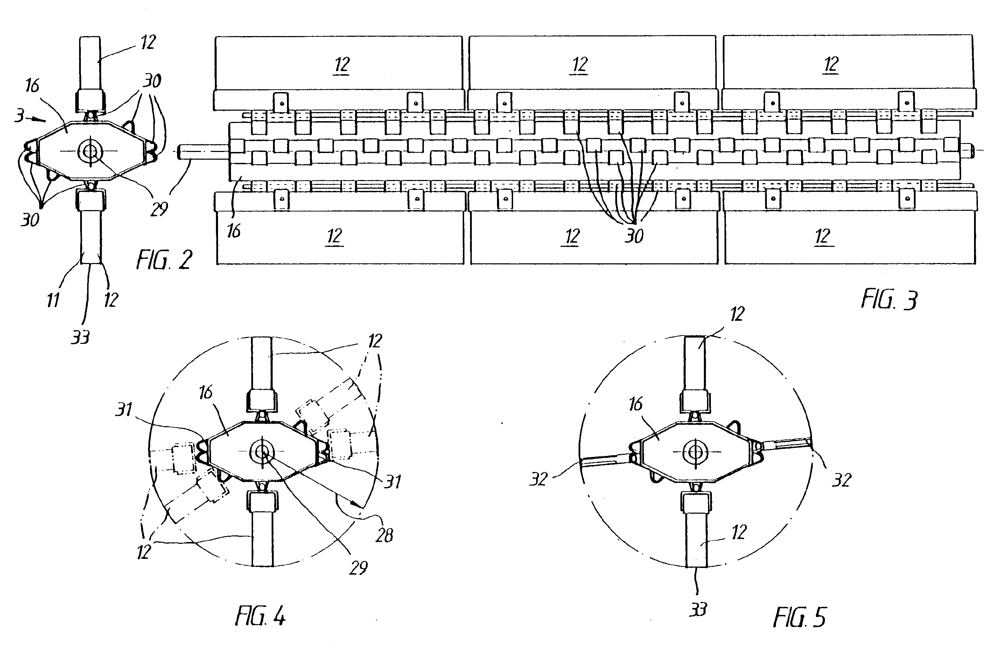

Fig. 2 der erfindungsgemäße Rotationskörper, wobei Bürstenelemente an dem Rotationskörper angeordnet sind, in der Seitenansicht,

Fig. 3 der Rotationskörper gemäß Fig, 2 in der Vorderansicht,

Fig. 4 der Rotationskörper gemäß Fig. 2, wobei die abgenutzten Bürstenelemente sich in unterschiedlichen Abständen zur Rotationsachse am Rotationskörper befestigen lassen,

Fig. 5 der Rotationskörper gemäß Fig. 2, wobei zusätzlich zu den Bürstenelementen noch Vertikutiermesser am Rotationskörper befestigt sind,

Fig. 6 das in erfindungsgemäßer Weise ausgebildete Gerät zum Mähen, Vertikutieren und Aufsammeln

EP 0 368 019 B1

von Gut, in Prinzipdarstellung und in der Seitenansicht,

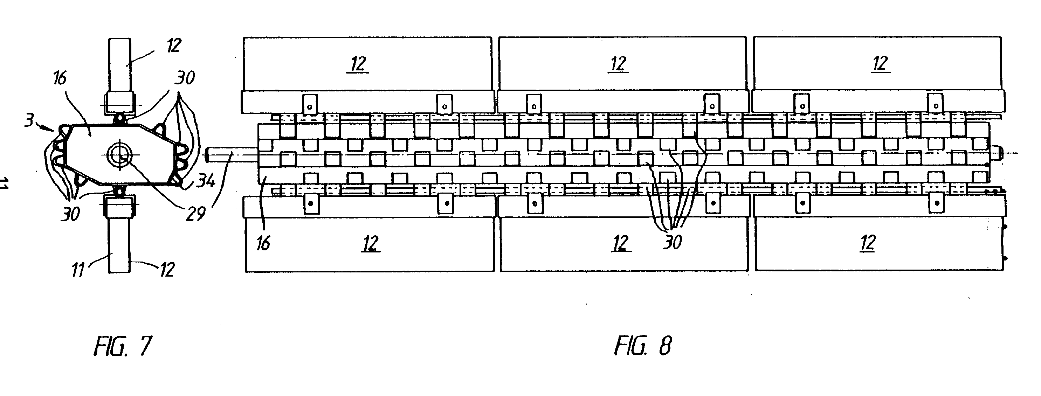

Fig. 7 der erfindungsgemäße Rotationskörper, wobei Bürstenelemente an dem Rotationskörper angeordnet sind, in der Seitenansicht,
Fig. 8 der Rotationskörper gemäß Fig. 6 in der Vorderansicht,
Fig. 9 der Rotationskörper gemäß Fig. 7, wobei neben den Bürstenelementen Messer an dem Rotationskörper befestigt sind,
Fig. 10 die Messerbefestigung an den Halterungen des Rotationskörpers in Teilansicht und
Fig. 11 der Rotationskörper gemäß Fig. 9, wobei die abgenutzen Bürstenelemente in den ihnen zugedachten Halterungen am Rotationskörper befestigt sind.

Das Gerät zum Kehren von Flächen und/oder zum Mähen bzw. zum Vertikutieren von Rasenflächen weist den verfahrbaren Rahmen 1, das Antriebsgehäuse 2 mit dem Rotationskörper 3 sowie die schwenkbaren Stützräder 4 und die ebenfalls schwenkbaren Nachlaufräder 5 auf. In dem Rahmen 1 ist der Sammelgutbehälter 6 derart befestigt, daß er zum Entleeren des Sammelgutbehälters 6 um die Schwenkachse 7 verschwenkt werden kann, so daß die sich im Sammelgutbehälter 6 befindlichen Materialien über die sich im oberen Bereich des Behälters 6 befindliche Entleerungsöffnung 8 beispielsweise auf einen Anhänger überladen lassen. Dieses Verschwenken des Sammelgutbehälters 6, um die Schwenkachse 7, erfolgt durch die beiden Hydraulikzylinder 9, welche über Hydraulikleitungen 9 mit dem Hydrauliksystem des das Gerät in Fahrtrichtung 10 ziehenden Ackerschleppers verbunden sind.

Die Einstellung der Arbeitstiefe zwischen den am Rotationskörper 3 angeordneten Arbeitswerkzeugen 11, welche beispielsweise als Bürstenelemente 12 ausgebildet sind, und der Bodenoberfläche 13 erfolgt mittels des Hydraulikzylinders 14. Dieses als Hydraulikzylinder 14 ausgebildete Einstellelement zur Einstellung der Arbeitstiefe, d.h., dem Abstand der Umlaufbahn 15 der an dem Rotationskörper 3, welcher als Halterungsrohr 16 ausgebildet ist, angeordneten Bürstenelemente 12 und der Bodenoberfläche 13, ist zwischen dem Rahmen 1 des Gerätes und den schwenkbaren Nachlaufrädern 5 angeordnet, wobei die Nachlaufräder 5 wiederum an den schwenkbaren Lenkerrahmen 17 befestigt sind. Der Hydraulikzylinder 14 ist auf der Seite des Arbeitskolbens 18 an der am Rahmen 1 befestigten Halterung 19 schwenkbar gelagert, wobei der Zylinder 20 des Hydraulikzylinders 14 über die Halterung 21 an dem schwenkbaren Lenkerrahmen 17 gelagert ist. Über die Strebe 22 ist der schwenkbare Lenkerrahmen 17 mit dem Antriebsgehäuse 2 für den Rotationskörper 3 verbunden. Die Neigung des Rahmens 1 gegenüber der Bodenoberfläche 13, d.h. die Arbeitstiefe der Arbeitswerkzeuge 11, läßt sich mittels des Hydraulikzylinders 14 einstellen, der die Führung des schwenkbaren Lenkerrahmens derart übernimmt, daß der Lenkerrahmen 17 um quer zur Fahrtrichtung 10 liegende Achsen 23 und nicht gegenüber dem Hydraulikzylinder 14 verschwenkt wird. Hierzu ist zwischen dem schwenkbaren Lenkerrahmen 17 und dem Hydraulikzylinder 14 jeweils das Führungselement 24 angeordnet. Ein derartiger, zur Einstellung der Arbeitstiefe zwischen dem Lenkerrahmen 17 und dem Rahmen des Gerätes 1 angeordneter Hydraulikzylinder 14 befindet sich im jeweiligen äußeren Bereich des Gerätes. Des weiteren läßt sich durch Veränderung der Neigung des Rahmens 1 gegenüber der Bodenoberfläche 13 die Höhe zwischen der Bodenoberfläche 13 und der Schwenkachse 7 variieren, wobei sich dieser Abstand bei ausgefahrenem Hydraulikzylinder 14 vergrößert und die Entladungshöhe beim Entleeren des Behälters 6 somit auch erhöht wird, so daß das im Sammelgutbehälter 6 aufgenommene Gut auch auf Anhänger mit hoher Ladefläche umgefüllt werden kann.

Damit nun das Aufsammeln des Kehrgutes bzw. des Gemähten und/oder aus dem Rasen herausvertikutieren Gutes in zufriedenstellender Weise erfolgt, ist es wichtig, daß der Abstand zwischen der Umlaufbahn 15 der als Bürstenelemente 12 ausgebildeten, am Rotationskörper 3 angeordneten Arbeitswerkzeuge 11 und dem Prallblech 25 einen annähernd konstanten Abstand zueinander aufweist. Dieses ist notwendig, damit ein exaktes Aufsammeln des Materials, mittels der am Rotationskörper 3 angeordneten Arbeitswerkzeuge 11, wobei der Rotationskörper 3 in Rotationsrichtung 26 angetrieben wird, und das aufzunehmende Gut über den Gutförderkanal 27 in den Sammelgutbehälter 6 gelangt, gewährleistet ist. Da die Bürstenelemente 12 einem Verschleiß unterliegen, so daß sich der Rotationsradius 28 der Umlaufbahnen 15 der Bürstenelemente 12 verkleinert, weist das Halterungsrohr 16 einen unrunden Querschnitt auf, so daß am Umfang des Halterungsrohres 16 mit unterschiedlichen radialen Abständen zur Rotationsachse 29 des Halterungsrohres 16, die Halterungen 30 für die Arbeitswerkzeuge 11, welche als Bürstenelemente 12 ausgebildet sein können, angebracht sind. Die Bürstenelemente 12 werden jeweils an zwei gegenüberliegenden Seiten des Halterungsrohres 16 mittels der Halterungen 30 an dem Halterungsrohr 16 befestigt.

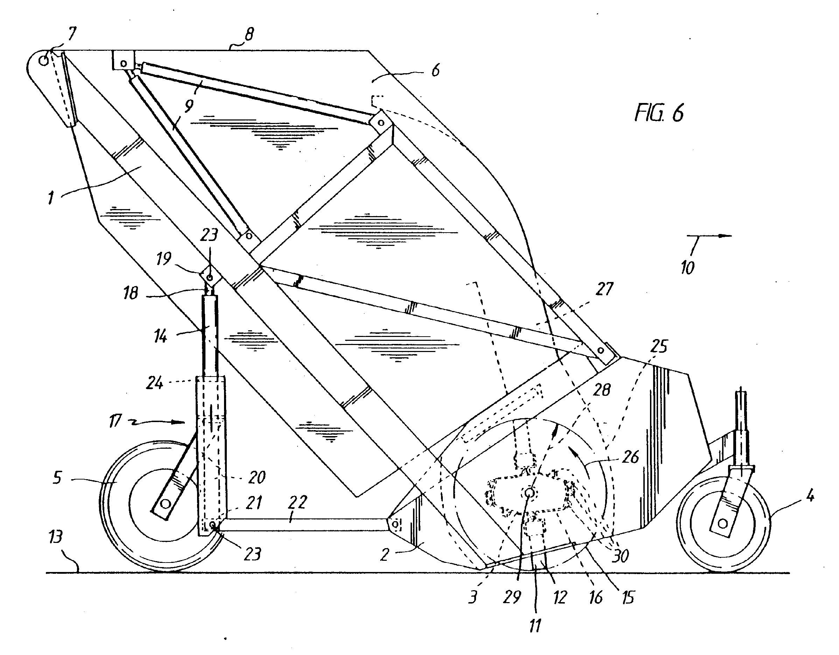

Die Fig. 4 zeigt die Anordnung der bedingt durch Verschleiß unterschiedlich langen Bürstenelemente 12 an den jeweiligen Halterungen 30 des Halterungsrohres 16. Dadurch, daß die Halterungen 30 für die Bürstenelemente 12 in unterschiedlichen radialen Abständen zur Rotationsachse 29 am Umfang des Halterungsrohres 16 angeordnet sind, wird gewährleistet, daß der Rotationsradius 28 zwischen der Rotationsachse 29 und der Umlaufbahn 15 langen der Bürstenelemente 12 immer gleichbleibt. Durch die Anordnung der durch Verschleiß kürzer gewordenen Bürstenelemente 12 in verschiedenen radialen Abständen zur Rotationsachse 29

3

des Halterungsrohres 16 wird gewährleistet, daß der Abstand zwischen der Umlaufbahn 15 der Bürstenelemente 12 und dem Prallblech 25 des Gutförderkanals 27 annähernd konstant bleibt, so daß das von den Bürstenelementen 12 aufgenommene Gut in ordnungsgemäßer Weise über den Gutförderkanal 27 in das Innere des Sammelgutbehälters 6 gelangt und gute Kehrarbeit der Bürstenelemente 12 auf der Bodenoberfläche 13 erreicht wird.

Auf den am weitesten von der Rotationsachse 29 entfernten Flächen 31 des Halterungsrohres 16 sind jeweils zwei Halterungen 30 in Umfangsrichtung des Halterungsrohres 16 gesehen nebeneinander angeordnet. In diesen am weitesten von der Rotationsachse 29 entfernten, auf den Flächen 31 angeordneten Halterungen 30 lassen sich auch Mäh- und/oder Vertikutiermesser 32 befestigen.

Die Fig. 5 zeigt die gleichzeitige Anordnung von Vertikutiermessern 32 und Bürstenelementen 12 am Halterungsrohr 16 des Rotationskörpers 3. Hierbei sind die Bürstenelemente 12 an den dichter zur Rotationsachse 29 angebrachten Halterungen 30 angeordnet, während die Messer 32 an den weiter von der Rotationsachse 29 des Rotationskörpers 3 angebrachten Halterungen 30 befestigt sind. Sind die Bürstenelemente 12 verschlissen, so daß ihre äußere Kante 33 einen zu großen Abstand zum vorgeschriebenen Rotationsradius 28 der Umlaufbahnen 15 aufweist, lassen sich entsprechend der Fig. 4 an den anderen Halterungen 30, welche einen größeren Abstand zur Rotationsachse 29 des Rotationskörpers 3 aufweisen, anordnen. Hierbei ist es dann auch möglich, das Mäh- und/oder Vertikutiermesser 32 und die Bürstenelemente 12 an den Halterungen 30 zu befestigen, welche auf den Flächen 31 des Rotationskörpers 3 angeordnet sind.

Durch die zusätzliche Anordnung von Bürstenelementen 12 am mit Mäh- und/oder Vertikutiermessern 32 bestückten Halterungsrohr 16 des Rotationskörpers 3 wird ein exaktes Aufsammeln des gemähten bzw. aus dem Rasen herausvertikutierten Gutes in exakter Weise gewährleistet.

Das Gerät zum Kehren von Flächen und/oder zum Mähen bzw. zum Vertikutieren von Rasenflächen gemäß Fig. 6 weist den verfahrbaren Rahmen 1, das Antriebsgehäuse 2 mit dem Rotationskörper 3 sowie die schwenkbaren Stützräder 4 und die ebenfalls schwenkbaren Nachlaufräder 5 auf. In dem Rahmen 1 ist der Sammelgutbehälter 6 derart befestigt, daß er zum Entleeren des Sammelgutbehälters 6 um die Schwenkachse 7 verschwenkt werden kann, so daß die sich im Sammelgutbehälter 6 befindlichen Materialien über die sich im oberen Bereich des Behälters 6 befindliche Entleerungsöffnung 8 beispielsweise auf einen Anhänger überladen lassen. Dieses Verschwenken des Sammelgutbehälters 6, um die Schwenkachse 7, erfolgt durch die beiden Hydraulikzylinder 9, welche über Hydraulikleitungen mit dem Hydrauliksystem des das Gerät in Fahrtrichtung 10 ziehenden Ackerschleppers verbunden sind.

Die Einstellung der Arbeitstiefe zwischen den am Rotationskörper 3 angeordneten Arbeitswerkzeugen 11, welche beispielsweise als Bürstenelemente 12 ausgebildet sind, und der Bodenoberfläche 13 erfolgt mittels des Hydraulikzylinders 14. Dieses als Hydraulikzylinder 14 ausgebildete Einstellement zur Einstellung der Arbeitstiefe, d.h., dem Abstand der Umlaufbahn 15 der an dem Rotationskörper 3, welcher als Halterungsrohr 16 ausgebildet ist, angeordneten Bürstenelemente 12 und der Bodenoberfläche 13, ist zwischen dem Rahmen 1 des Gerätes und den schwenkbaren Nachlaufrädern 5 angeordnet, wobei die Nachlaufräder 5 wiederum an den schwenkbaren Lenkerrahmen 17 befestigt sind. Der Hydraulikzylinder 14 ist auf der Seite des Arbeitskolbens 18 an der am Rahmen 1 befestigten Halterung 19 schwenkbar gelagert, wobei der Zylinder 20 des Hydraulikzylinders 14 über die Halterung 21 an dem schwenkbaren Lenkerrahmen 17 gelagert ist. Über die Strebe 22 ist der schwenkbare Lenkerrahmen 17 mit dem Antriebsgehäuse 2 für den Rotationskörper 3 verbunden. Die Neigung des Rahmens 1 gegenüber der Bodenoberfläche 13, d.h. die Arbeitstiefe der Arbeitswerkzeuge 11, läßt sich mittels des Hydraulikzylinders 14 einstellen, der die Führung des schwenkbaren Lenkerrahmens derart übernimmt, daß der Lenkerrahmen 17 um quer zur Fahrtrichtung 10 liegende Achsen 23 und nicht gegenüber dem Hydraulikzylinder 14 verschwenkt wird. Hierzu ist zwischen dem schwenkbaren Lenkerrahmen 17 und dem Hydraulikzylinder 14 jeweils das Führungselement 24 angeordnet. Ein derartiger, zur Einstellung der Arbeitstiefe zwischen dem Lenkerrahmen 17 und dem Rahmen des Gerätes 1 angeordneter Hydraulikzylinder 14 befindet sich im jeweiligen äußeren Bereich des Gerätes. Des weiteren läßt sich durch Veränderung der Neigung des Rahmens 1 gegenüber der Bodenoberfläche 13 die Höhe zwischen der Bodenoberfläche 13 und der Schwenkachse 7 variieren, wobei sich dieser Abstand bei ausgefahrenem Hydraulikzylinder 14 vergrößert und die Entladungshöhe beim Entleeren des Behälters 6 somit auch erhöht wird, so daß das im Sammelgutbehälter 6 aufgenommene Gut auch auf Anhänger mit hoher Ladefläche umgefüllt werden kann.

Damit nun das Aufsammeln des Kehrgutes bzw. des gemähten und/oder aus dem Rasen herausvertikutieren Gutes in zufriedenstellender Weise erfolgt, ist es wichtig, daß der Abstand zwischen der Umlaufbahn 15 der als Bürstenelemente 12 ausgebildeten, am Rotationskörper 3 angeordneten Arbeitswerkzeuge 11 und dem Prallblech 25 einen annähernd konstanten Abstand zueinander aufweist. Dieses ist notwendig, damit ein exaktes Aufsammeln des Materials, mittels der am Rotationskörper 3 angeordneten Arbeitswerkzeuge 11, wobei der Rotationskörper 3 in Rotationsrichtung 26 angetrieben wird, und das aufzunehmende Gut über den Gutförderkanal 27 in den Sammelgutbehälter 6 gelangt, gewährleistet ist. Da die Bürstenelemente 12 einem Ver-

4

schleiß unterliegen, so daß sich der Rotationsradius 28 der Umlaufbahnen 15 der Bürstenelemente 12 verkleinert, weist das Halterungsrohr 16 einen unrunden Querschnitt auf, so daß am Umfang des Halterungsrohres 16 mit unterschiedlichen radialen Abständen zur Rotationsachse 29 des Halterungsrohres 16, die Halterungen 30 für die Arbeitswerkzeuge 11, welche als Bürstenelemente 12 ausgebildet sein können, angebracht sind. Die Bürstenelemente 12 werden jeweils an zwei gegenüberliegenden Seiten des Halterungsrohres 16 mittels der Halterungen 30 an dem Halterungsrohr 16 befestigt.

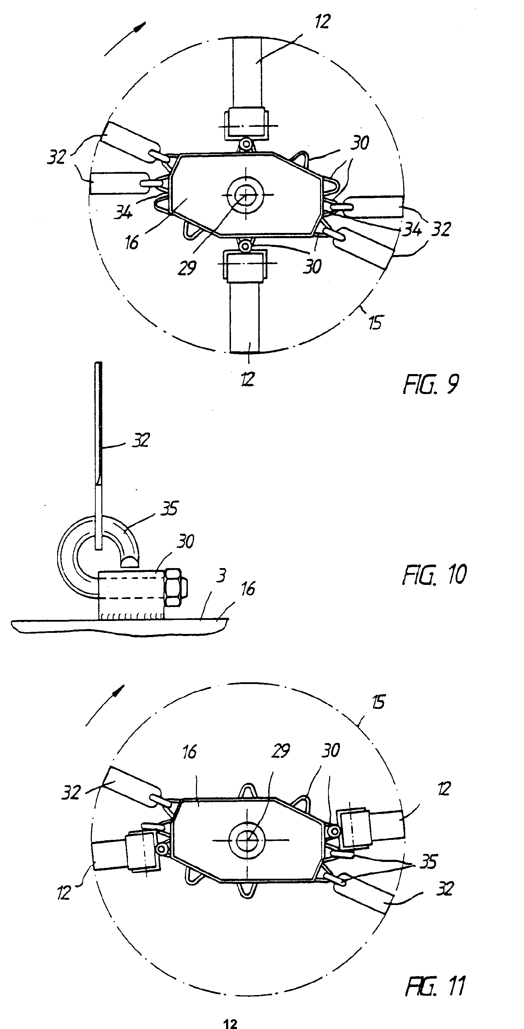

Die Fig. 9 zeigt die Anordnung von zusätzlichen Vertikutiermessern 32 neben den Bürstenelementen 12 an den Halterungen 30 des Halterungsrohres 16. Die Vertikutiermesser 32 sind an den am weitesten von der Rotationsachse 29 entfernten Flächen 34 angeordnet, wobei sich auf diesen Flächen 34 des Halterungsrohres 16 jeweils drei Halterungen 30 in Umfangsrichtung des Halterungsrohres 16 gesehen nebeneinander angeordnet sind. In diesen am weitesten von der Rotationsachse 29 entfernten, auf den Flächen 34 angeordneten Halterungen 30 sind die als Mäh- und/oder Vertikutiermesser 32 ausgebildeten Arbeitswerkzeuge 11 mittels der Zwischenglieder 35 an den an dem Rotationskörper 3 angeschweißten Halterungen 30 befestigt. Diese Mäh- und/oder Vertikutiermesser 32 lassen sich werkzeuglos an den Zwischengliedern 35 montieren bzw. demontieren.

Die Fig. 11 zeigt die Anordnung von verschlissenen, kürzeren Bürstenelementen 12 an den am weitesten von der Rotationsachse 29 entfernten Halterungen 30 an dem Halterungsrohr 16. Dadurch, daß die Halterungen 30 für die Bürstenelemente 12 in unterschiedlichen radialen Abständen zur Rotationsachse 29 am Umfang des Halterungsrohres 16 angeordnet sind, wird gewährleistet, daß der Rotationsradius 28 zwischen der Rotationsachse 29 und der Umlaufbahn 15 bei unterschiedlich langen Bürstenelementen 12 immer gleichbleibt. Durch die Anordnung der durch Verschleiß kürzer gewordenen Bürstenelemente 12 in verschiedenen radialen Abständen zur Rotationsachse 29 des Halterungsrohres 16 wird gewährleistet, daß der Abstand zwischen der Umlaufbahn 15 der Bürstenelemente 12 und dem Prallblech 25 des Gutförderkanals 27 annähernd konstant bleibt, so daß das von den Bürstenelementen 12 aufgenommene Gut in ordnungsgemäßer Weise über den Gutförderkanal 27 in das Innere des Sammelgutbehälters 6 gelangt und gute Kehrarbeit der Bürstenelemente 12 auf der Bodenoberfläche 13 erreicht wird. Hierzu ist das der Halterung 30 für das jeweilige Bürstenelement 12 benachbarte Vertikutiermesser 32 von dem Zwischenglied 35 entfernt, so daß sich das Bürstenelement 12 in seiner Halterung 30 frei bewegen kann. Die Montage der Bürstenelemente 12 läßt sich so auf einfachste Weise durchführen, da nur die Mäh- und/oder Vertikutiermesser 32 der benachbarten Halterungen entfernt werden müssen, wobei die Zwischenglieder 35 an dem Halterungsrohr 16 verbleiben.

Durch die zusätzliche Anordnung von Bürstenelementen 12 am mit Mäh- und/oder Vertikutiermessern 32 bestückten Halterungsrohr 16 des Rotationskörpers 3 wird ein exaktes Aufsammeln des gemähten bzw. aus dem Rasen herausvertikutierten Gutes in exakter Weise gewährleistet.

## Patentansprüche

1. Gerät zum Mähen und Vertikutieren von Rasenflächen mit einem verfahrbaren Rahmen (1), an welchem ein Prallblech (25), ein Auffangbehälter (6) und zwischen diesem eine rotierend gelagerte Rotationstrommel (3) angeordnet ist, an welchem Mähmesser und/oder Vertikutiermesser (32) angeordnet sind, wobei zusätzlich zu den Messern (32) an dem Rotationskörper (3) Bürstenelemente (12) angebracht sind, dadurch gekennzeichnet, daß der Rotationskörper (3) einen Halterungsrohr mit unrunden Querschnitt aufweist, wobei in Umfangrichtung des Rotationskörpers (3) gesehen mit unterschiedlich radialen Abständen zur Rotationsachse (29) des Rotationskörpers (3) Halterungen (30) für die Bürstenelemente (12) und für die Messer (32) angebracht sind, wobei die Bürstenelemente (12) an den dichter zur Rotationsachse (29) angebrachten Halterungen (30) oder an den entsprechenden Halterungen in unterschiedlichen radialen Abständen zur Rotationsachse des Halterungsrohres angebracht sind, während die Messer (32) an den weiter von der Rotationsachse (29) des Rotationskörpers (3) angebrachten Halterungen (30) befestigt sind.

2. Gerät nach Anspruch 1, dadurch gekennzeichnet, daß das Halterungsrohr (16) einen ovalen Querschnitt aufweist.

3. Gerät nach einem oder mehreren der vorstehenden Ansprüche, dadurch gekennzeichnet, daß das Halterungsrohr (16) einen mehreckigen Querschnitt aufweist, der einem zusammengedrückten Vieleck ähnelt.

4. Gerät nach einem oder mehreren der vorstehenden Ansprüche, dadurch gekennzeichnet, daß ein im Querschnitt mehreckiger, vorzugsweise achteckiger Rotationskörper (3) vorgesehen ist, welcher im Querschnitt symmetrisch ist.

5. Gerät nach einem oder mehreren der vorstehenden Ansprüche, dadurch gekennzeichnet, daß der Rotationskörper (3) im Querschnitt achteckig sowie einer Ellipse angenähert, jedoch mit geraden Flächen, ausgebildet ist.

6. Gerät nach Anspruch 1, dadurch gekennzeichnet, daß an der Rotationstrommel (3,16) jeweils für die Messer (32) und für die Bürstenelemente (12) eigene Halterungen (30) angebracht sind.

7. Gerät nach Anspruch 6, dadurch gekennzeichnet, daß die Messer (32) mit Zwischengliedern (35) an den an der Rotationstrommel (3,16) angebrachten Halterungen (30) befestigt sind, und daß diese Zwischenglieder (35) an der Rotationstrommel (3,16) verbleiben, wenn die Bürstenelemente (12) an der Rotationstrommel (3,16) angeordnet sind.

## Claims

1. Arrangement for mowing and scarifying grass surfaces, including a displaceable frame (1), on which a baffle plate (25), a collecting container (6) and therebetween a rotatingly mounted rotary drum (3) are disposed, and on which mowing blades and/or scarifying blades (32) are disposed, brush elements (12) being provided on the rotary body (3) in addition to the blades (32), characterised in that the rotary body (3) has a retaining tube with a non-circular cross-section, holders (30) for the brush elements (12) and for the blades (32) being provided with different radial spacings from the rotary axis (29) of the rotary body (3), when viewed with respect to the circumferential direction of the rotary body (3), the brush elements (12) being provided on the holders (30), which are provided closer to the rotary axis (29), or on the corresponding holders at different radial spacings from the rotary axis of the retaining tube, while the blades (32) are mounted on the holders (30), which are provided further remote from the rotary axis (29) of the rotary body (3).

2. Arrangement according to claim 1, characterised in that the retaining tube (16) has an oval cross-section.

3. Arrangement according to one or more of the preceding claims, characterised in that the retaining tube (16) has a multi-angular cross-section which resembles a compressed polygon.

4. Arrangement according to one or more of the preceding claims, characterised in that a rotary body (3) is provided with a multi-angular cross-section, preferably an octagonal cross-section, and has a symmetrical cross-section.

5. Arrangement according to one or more of the preceding claims, characterised in that the rotary body (3) has an octagonal cross-section and resembles an ellipse, but it has straight faces.

6. Arrangement according to claim 1, characterised in that holders (30) are provided on the rotary drum (3, 16) specifically for the blades (32) and for the brush elements (12).

7. Arrangement according to claim 6, characterised in that the blades (32) are mounted with intermediate members (35) on the holders (30), which are provided on the rotary drum (3, 16), and in that these intermediate members (35) remain on the rotary drum (3, 16) when the brush elements (12) are disposed on the rotary drum (3, 16).

## Revendications

1. Appareil pour tondre et aérer (scarifier) des gazons, comportant un châssis mobile (1) muni d'une tôle de guidage (25), d'un bac collecteur (6) ayant entre ceux-ci un tambour rotatif muni de couteaux de coupe et/ou de couteaux de scarification (32), l'organe rotatif (3) comportant des éléments de balai (12) en plus des couteaux (32), appareil caractérisé en ce que l'organe rotatif (3) comporte un tube de support de section non circulaire et l'organe rotatif (3) comporte dans sa direction périphérique, des fixations (30) à des distances radiales différentes par rapport à l'axe de rotation (29) de l'organe rotatif (3) pour recevoir des éléments de balai (12) et des couteaux (32), les éléments de balai (12) étant prévus sur les fixations (30) les plus proches de l'axe de rotation (29) ou sur des fixations correspondantes, à des distances radiales différentes par rapport à l'axe du tube de support, alors que les couteaux (32) sont montés sur les fixations (30) les plus éloignées de l'axe de rotation (29) du corps rotatif (3).

2. Appareil selon la revendication 1, caractérisé en ce que le tube de support (16) présente une section ovale.

3. Appareil selon l'une ou plusieurs des revendications précédentes, caractérisé en ce que le tube de fixation (16) présente une section polygonale analogue à un polygone écrasé.

4. Appareil selon l'une ou plusieurs des revendications précédentes, caractérisé par un organe rotatif (3) à section polygonale et notamment octogonale, section symétrique.

5. Appareil selon l'une ou plusieurs des revendications précédentes, caractérisé en ce que l'organe rotatif (3) est de section octogonale assimilable à une ellipse à surface droite.

6. Appareil selon la revendication 1, caractérisé en ce que l'organe rotatif (3, 16) comporte des fixations (30) respectives pour les couteaux (32) et pour les éléments de balai (12).

7. Appareil selon la revendication 6, caractérisé en ce que les couteaux (32) sont fixés avec des organes intermédiaires (35) sur des fixations (30) portées par l'organe rotatif (3,16) et en ce que ces organes intermédiaires (35) restent sur l'organe rotatif (3,16) lorsque les éléments de balai (12) sont montés sur l'organe rotatif (3,16).

FIG. 1

EP 0 368 019 B1

FIG. 2

FIG. 3

FIG. 4

FIG. 5

EP 0 368 019 B1

FIG. 6

FIG. 7

FIG. 8

EP 0 368 019 B1

FIG. 9

FIG. 10

FIG. 11